# EUROPEAN PATENT SPECIFICATION

(11) **EP 0 735 350 B1**
(45) Date of publication and mention of the grant of the patent: **06.02.2002**
(21) Application number: 96104986.3
(22) Date of filing: 28.03.1996
(51) Int. Cl.: G01J 3/453, G01J 3/42

(54) **Spectroscope comprising an optical fibre branching**
Spektroskop mit faseroptischer Verzweigung
Spectroscope avec un branchement à fibre optique

(30) Priority: 31.03.1995 JP 7495295
(43) Date of publication of application: 02.10.1996
(73) Proprietor: Yokogawa Electric Corporation, Tokyo 180-8750 (JP)
(72) Inventor: Nanko, Tomoaki, Hoya-shi, Tokyo 202 (JP); Tanaami, Takeo, Katsushika-ku, Tokyo 124 (JP); Murata, Akihiro, Fussa-shi, Tokyo 197 (JP)
(74) Representative: Henkel, Feiler, Hänzel

(56) References cited:
- EP-A- 0 262 878
- EP-A- 0 431 805
- EP-A- 0 634 677
- WO-A-90/07697
- WO-A-91/14157
- DE-A- 2 929 186
- US-A- 4 538 910
- US-A- 4 696 570
- US-A- 5 212 748

## Description

### BACKGROUND OF THE INVENTION

The present invention relates to a spectroscope, such as Fourier-transform spectroscopes or dispersive spectroscopes, especially to an improvement in the accuracy of measured data by these spectroscopes.

### DESCRIPTION OF THE PRIOR ART

Conventional Fourier-transform spectroscopes were configured to obtain the spectral characteristics of samples by irradiating the above samples through an optical fiber with an outgoing light from a Michelson interferometer on which white light was incident from a white-light source (hereafter abbreviated as light source), and by converting the transmitted light from the samples to electrical signals using a photo-detector (hereafter abbreviated as detector) and further implementing a Fourier transformation.

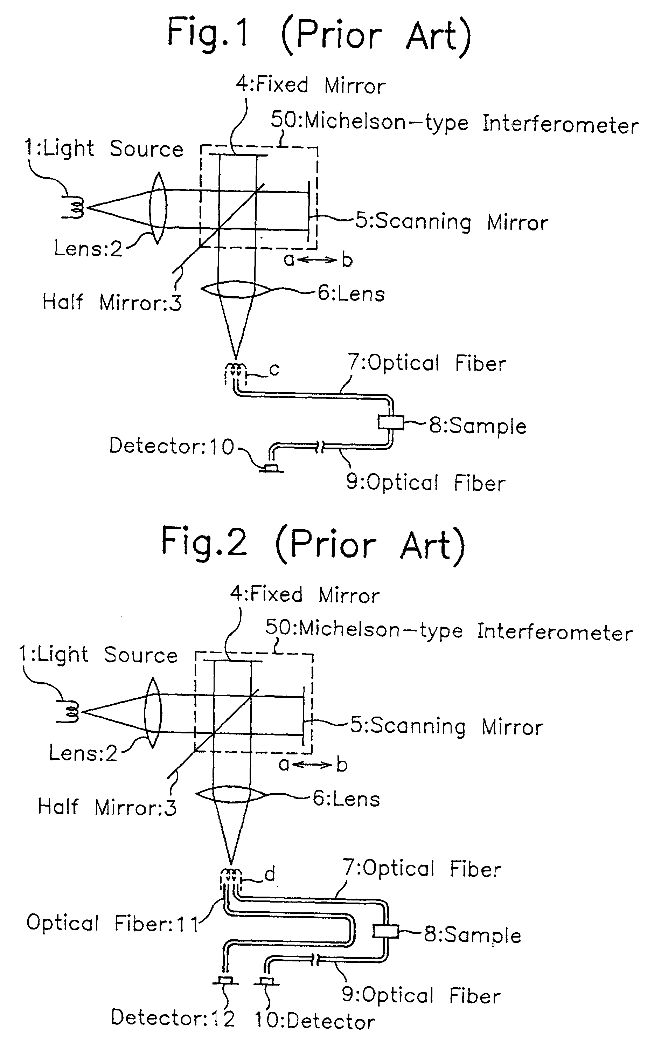

Figure 1 shows a configuration block diagram for an example of such a conventional Fourier-transform spectroscope. White light emitted from light source 1 is changed to parallel light first by optical means 2, which normally uses a lens, and is incident on Michelson interferometer 50. The interference light obtained at Michelson interferometer 50 is focused by second optical means (which normally uses a lens) 6 and is incident on optical fiber 7. This interference light, after transmitting sample 8, is incident on detector 10 through optical fiber 9.

In such a configuration, fixed mirror 4 in Michelson interferometer 50 is fixed and only scanning mirror 5 is moved in the direction of "a" - "b" in this figure. A change in the interference signal in that case is measured by detector 10 and is subjected to a Fourier transformation using a Fourier-transform converter (not shown in the figure) to obtain the spectral characteristic of sample 8.

In such a system, if the characteristics of optical fibers 7 and 9 change due to environmental changes such as ambient temperature changes, there is a problem that the measurement is made as if the spectral characteristics of sample 8 are also changed.

As equipment which dissolves this problem, there is the Fourier-transform spectroscope mentioned in a published utility model of publication No. 23243-1995, filed by the applicant of this application to the patent office of Japan. Figure 2 shows this Fourier-transform spectroscope configuration. The differences between Figures 1 and 2 are as follows:

In Figure 2, optical fiber 11 and detector 12 are added. More closely, in a position where the image of light source 1 forms, optical fiber 11 is located close to and along optical fiber 7. Optical fiber 11 is arranged so that it takes the same path of the optical fibers 7 and 9 except that there is no sample on its way and its optical characteristic is also the same as optical fibers 7 and 9.

Outgoing light from optical fiber 11 is detected by detector 12 and processed in an identical manner to the interference signal detected by detector 10. In this case, as spectral characteristic changes due to environmental changes in optical fiber 11 are included in a spectrum of the interference light detected by detector 12, and the changes in optical fiber 11 are considered identical to those in optical fibers 7 and 9 because optical fiber 11 takes the same path as optical fibers 7 and 9, the environmental changes in the optical fiber can be compensated by taking the ratio of both interference signal spectra.

However, Michelson interferometer 50 is also subjected to effects, such as temperature changes, and if the internal mirrors become tilted due to such temperature change, the interference light in the position of "d" in Figure 2 becomes non-uniform. Thus, the problem still remains that this results in different characteristics between the interference light incident on optical fiber 7 and that incident on optical fiber 11, and so this difference is not compensated but measured superimposed on the spectral characteristics of sample 8.

In addition, since these two optical fibers receive the light emitted from different places of the light source, it also causes another problem where the interference light of both optical fibers differ due to deterioration of the light source.

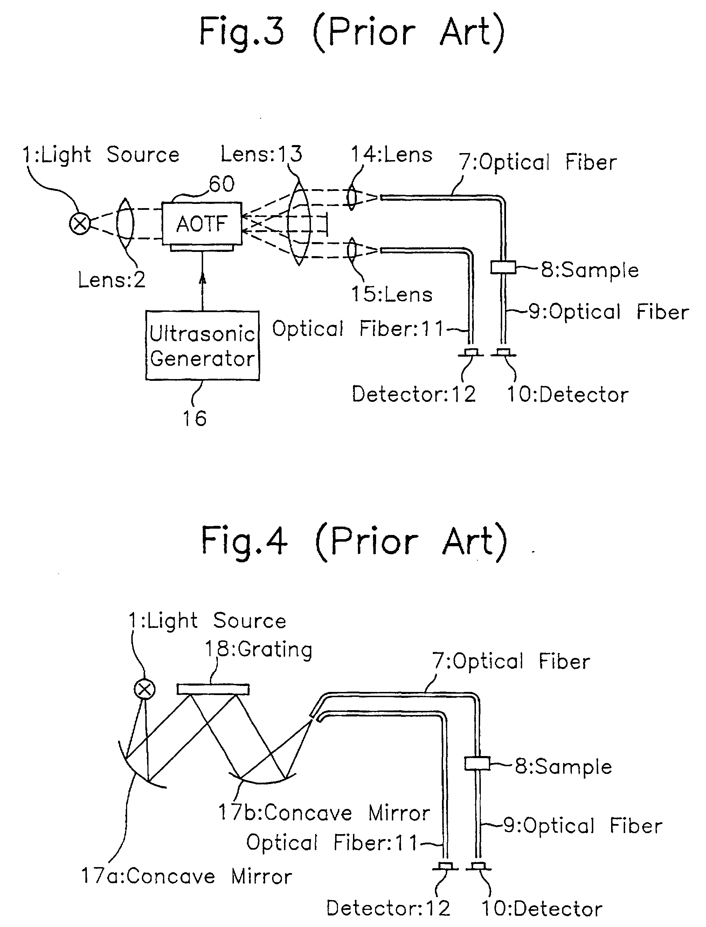

This problem also exists in a spectroscope using an acousto-optical device (AOTF) as shown in Figure 3 or a spectroscope using diffraction grating 18. If only the part of the spectroscope in Figure 3 different from that in Figure 2 is described, it is as shown below. AOTF 60 branches the incident light from light source 1 to two light beams because of the birefringence of its crystal. These beams are made parallel with lens 13 and each parallelized beam is focused with lenses 14 and 15 and is incident on each optical fiber. In this case, an arbitrary wavelength or continuous wavelength light can be taken out by changing the frequency of the ultrasonic wave generated with ultrasonic generator 16.

For the spectroscope using the diffraction grating shown in Figure 4, the light from light source 1 is reflected with concave mirror 17a, applied to diffraction grating 18, and the refracted light is again reflected with concave mirror 17b and is incident on sample optical fiber 7 and reference optical fiber 11. In addition, the wavelength of the light incident on optical fibers 7 and 11 can be changed by rotating grating 18.

However, even in these spectroscopes of the above configurations, there is a problem that the light quantity that enters both optical fibers (sample and reference fibers) and the spectra change delicately because the AOTF and the diffraction grating deform or move due to temperature changes and/or external vibration as in Michelson interferometer 50.

US-A-4,696,570 discloses a spectroscope using light guides containing a plurality of optical fibers for a sample and reference light. Further, in this document the importance of a statistical balance distribution of light between both sample and reference cell is discussed.

### SUMMARY OF THE INVENTION

The above object is achieved by a spectroscope according to claim 1. The dependent claims are related to further advantageous aspects of the present invention.

The purpose of the present invention, in view of the above problems, lies in implementing a spectroscope which can accurately measure the spectral characteristics of samples even if the outgoing light from the spectroscope light source (including an original light source and an interferometer or the like) becomes non-uniform due to environmental changes on the spectroscope side by providing a configuration in which, after receiving the light from the spectroscope light source side with a single optical fiber, the light branches off to two optical fibers.

By using such a configuration, the spectral characteristics can be accurately measured since the outgoing light beam from the spectroscope light source side is incident on both the measurement and the reference optical fibers in common even if the outgoing light beam becomes non-uniform due to environmental changes on the spectroscope light source side.

### BRIEF DESCRIPTION OF THE DRAWING

Figure 1 is an example of the configuration of conventional Fourier-transform spectroscopes.

Figure 2 is an example of the configuration of another conventional Fourier-transform spectroscopes.

Figure 3 is an example of the configuration of conventional spectroscopes using an acousto-optical device.

Figure 4 is an example of the configuration of conventional spectroscopes using a diffraction grating.

Figure 5 is a diagram showing an embodiment related to the present invention.

Figure 6 shows an embodiment to illustrate the details of an optical coupler.

Figure 7 shows another embodiment to illustrate an optical coupler.

Figure 8 shows yet another embodiment of the optical coupler.

Figure 9 shows a fourth embodiment of the optical coupler.

### DESCRIPTION OF THE PREFERRED EMBODIMENTS

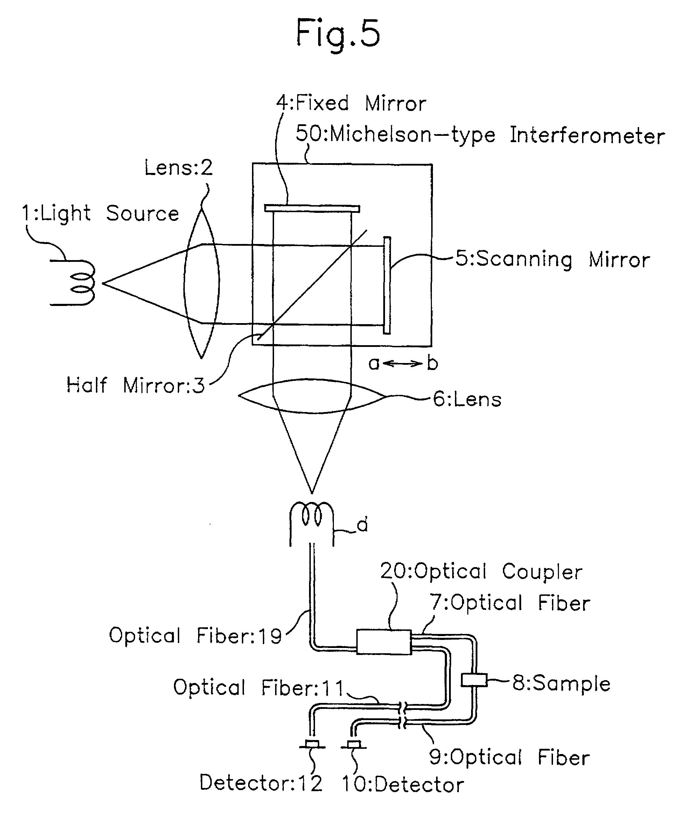

Now the present invention is described in detail using the drawings. Figure 5 is a diagram showing an example of an embodiment of the spectroscope related to the present invention. In Figure 5, the same symbols as in Figure 2 are given to the equivalent parts in the figure and the description of those parts is omitted.

The differences in Figure 5 from those in Figure 2 are the portions of optical fiber 19 and optical coupler 20. Interference light from Michelson interferometer 50 is focused on part "d" in the figure making an image of light source 1 and is incident on optical fiber 19 whose input end is arranged at this part. This interference light is divided into two by optical coupler 20 and is incident on optical fibers 7 and 11 respectively.

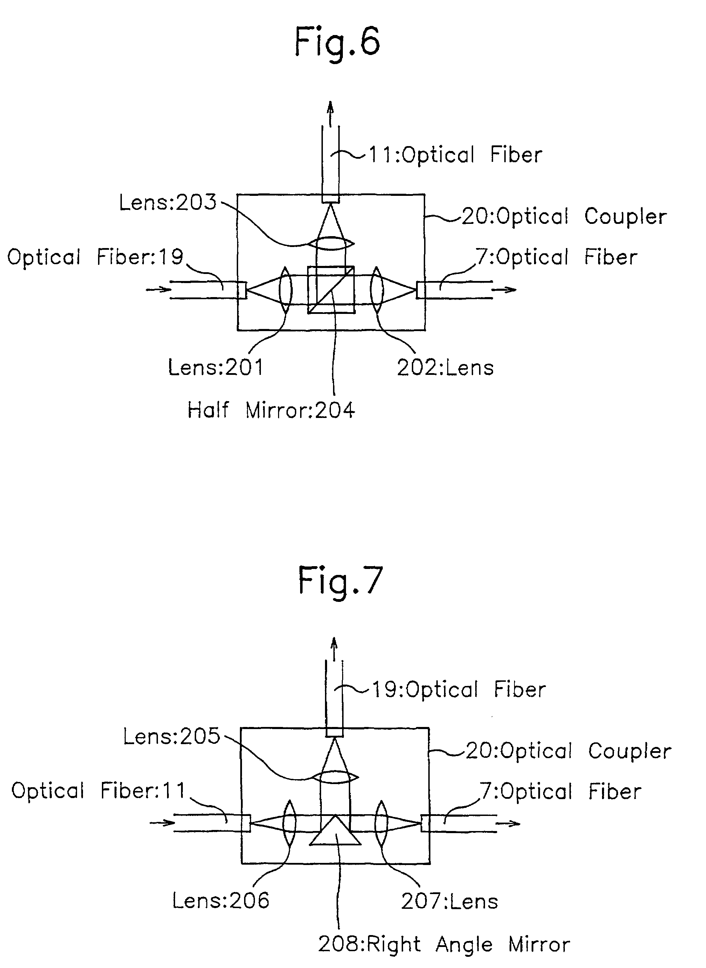

Figure 6 shows an embodiment of the present invention to illustrate the details of optical coupler 20. The optical coupler uses a half mirror. Outgoing light from optical fiber 19 is parallelized with lens 201 and is incident on half mirror 204. Half mirror 204 transmits a part of the incident light and the transmitted light is focused with lens 202 and incident on the end face of optical fiber 7. Also, the light reflected from half mirror 204 is focused with lens 203 and incident on the end face of optical fiber 11.

Figure 7 shows a light coupler using a right angle mirror. Outgoing light from optical fiber 19 is parallelized with lens 205 and is incident on right angle mirror 208. Right angle mirror 208 reflects the left half of the incident light beam towards lens 206 and this beam is focused with lens 206 and is incident on the end face of optical fiber 11. Right angle mirror 208 reflects similarly the right half the incident light beam towards lens 207 and this beam is focused with lens 207 and is incident on the end face of optical fiber 7.

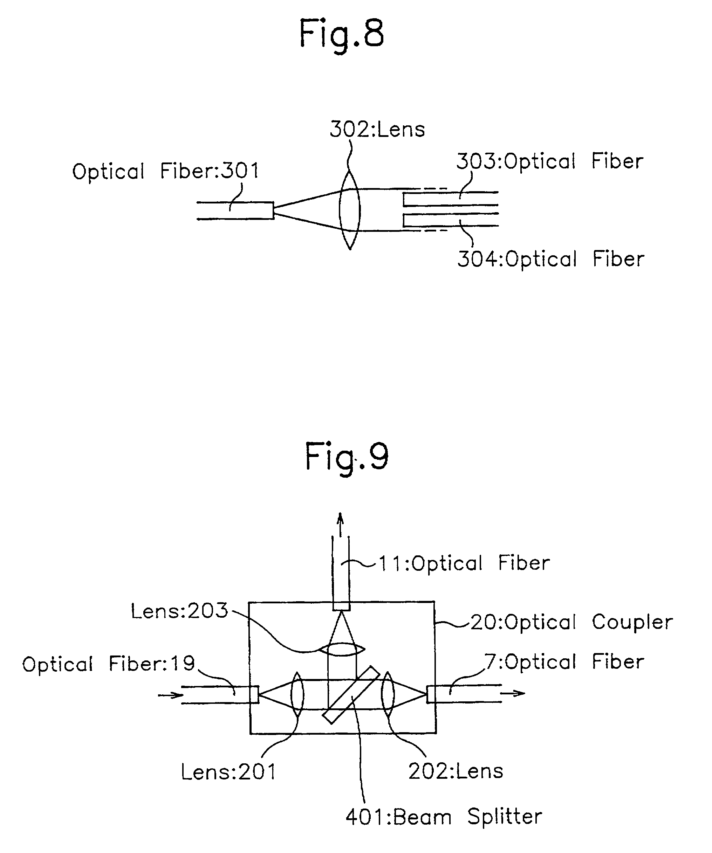

Figure 8 shows another embodiment of this invention to illustrate the optical coupler using a lens. Outgoing light from first optical fiber 301 is parallelized with lens 302 and then is incident on second and third optical fibers 303 and 304.

In the above-mentioned configurations, the characteristics of light source 1 and optical fibers 19, 7, and 9 are included in addition to those of sample 8 in the spectrum of the measurement signal, while the characteristics of light source 1 and optical fibers 19 and 11 are included in the spectrum of the reference signal.

As optical fiber 11 is located in the same path of optical fibers 7 and 9, optical fiber 11 and optical fibers 7 and 9 show identical characteristics. Therefore, by dividing the spectrum characteristics of the measurement signal by those of the reference signal, the environmental changes in optical fibers 19, 7, and 9 can be compensated.

The non-uniformity of interference light in position "d," which is generated by the tilting of the mirrors due to temperature changes and influences by signals in the configuration in Figure 5, can also be compensated because the light is received with a single optical fiber in the position of "d" and then divided into the lights for the measurement and reference signals. This configuration is'also similarly effective for the deterioration of the light source.

In addition, the present invention is not limited to the above examples of embodiment. For example, as an optical coupler, those using general, commercially available optical waveguides and fusion splice optical fibers can also be used.

The present invention can also be configured so that the measurement and reference signals can be taken out by arranging optical fibers close to each other in the position of "d" shown in Figure 5 as indicated in the examples of a conventional configuration in Figure 2, and by attaching optical couplers to each optical fiber. Through such a configuration, multi-channel measurement will be available using an interferometer as a light source.

In addition, light quantities for measurement and reference signals are not necessarily 1 : 1. The light quantity on the measurement signal side is attenuated by the sample and sample chamber. Accordingly, if the light quantity on the measurement signal side is correspondingly increased, for example, by setting the light quantity ratio on the measurement and reference sides to 2 : 1, the loss due to samples and others can be compensated, and a collectively higher S/N ratio than the case of a ratio of 1 : 1 can be obtained.

Figure 9 is a diagram of an optical coupler that realizes this concept. Light from optical fiber 19 is separated by beam splitter 401 before being incident on optical fiber 7 on the sample side and the divided light is incident on optical fiber 11 on the reference side. For a near-infrared ray, a glass plate itself without metal-film deposition by vacuum evaporation can be used because the surface reflection from the glass surface is about 4%.

This makes the signal light about 90% of the outgoing light from optical fiber 19 even if losses in the lens and others are taken into account, leading to an improvement in the S/N ratio.

If the light quantity on the reference side is short for the reason that a decrease in the light quantity on the measurement side mismatches the branching ratio, degradation of the S/N ratio will be prevented by, e.g., lengthening the integration time of the detection signal on the reference side only. This is because the integration time on the reference side which can follow temperature changes in the light source and optical fibers itself is sufficient, while that time on the measurement side must be determined following the sample changes. For example, for a sample flowing through a pipeline with consideration to control it with a valve, it is desirable to have an integration response time of 1 to 10 seconds, while the time constant of a few to tens of minutes is enough for temperature changes in the light source and optical fibers on the reference side. That is, the integration time on the reference side can be several to tens of times that on the measurement side.

The above beam splitter may be made of quartz or calcium fluoride. A splitter not utilizing surface reflection but utilizing a thin film applied to its surface may be used, although durability becomes slightly lower. In addition, the ratio of the reference light to the measurement light is not limited to the above value but it is sufficient that the light quantity on the reference side is smaller than that on the measurement side.

As mentioned above, the spectroscope by the present invention can provide accurate measurement without being affected by temperature and other changes in the interferometer part because its configuration is taken to receive the outgoing interference light from a Michelson interferometer with a single optical fiber and then branch the light into two optical fibers using an optical coupler to make the measurement and reference signals.

## Claims

1. A spectroscope comprising at least two optical fibers (7, 9, 11) one for measurement, which is used on a light path through a sample chamber (8), and one for reference;
a spectroscope light source (1, 50);
a first optical fiber (19) whose input end is located on an outgoing light path from said light source to said sample chamber (8) ;
an optical coupler (20) which separates the output light of the said first optical fiber (19) into two light beams incident on said measurement and reference optical fibers (7, 9, 11), respectively; and
first and second photo-detectors (10, 12) which detect output light beams from said measurement and reference optical fibers (7, 9, 11), respectively.

2. A spectroscope in accordance with claim 1, wherein the said optical coupler (20) uses a half mirror (204) for the branching part of the light and is configured so that the transmitted light and reflected light with the half mirror (204) are incident on the said measurement and reference optical fibers (7, 9, 11), respectively.

3. A spectroscope in accordance with claim 1, wherein the said optical coupler (20) uses a two-surface mirror (208) located at the center of the outgoing light path from the said first optical fiber (19) for the branching part of the light and is configured so that reflected light beams from this mirror are incident on the said measurement and reference optical fibers (7, 9, 11), respectively.

4. A spectroscope in accordance with claim 1, wherein the said optical coupler (20) uses a condensing lens (302) or mirror for the branching part of the light and is configured so that the outgoing light from the said first optical fiber (19) focused with the above condensing lens (203) or mirror is incident on the said measurement and reference optical fibers (7, 9, 11).

5. A spectroscope in accordance with claim 1, wherein the branching part of the said optical coupler (20) is formed with an optical waveguide.

6. A spectroscope in accordance with claim 1, wherein the branching part of the said optical coupler (20) is formed by fusing or mechanically adhering two optical fibers in parallel.

7. A spectroscope according to claim 1, wherein the spectroscope light source (1, 50) comprises
a light source (1);
a first optical means (2) which parallelizes the output light of the light source;
a Michelson interferometer (50) on which the output light from the first optical means is incident; and
a second optical means (6) which focuses the output light from the Michelson interferometer (50);
and wherein said first optical fiber (19) has an input end located in the vicinity of the focal plane of the second optical means (6) within the range of the image of the said light source (1) made on this focal plane.

8. A spectroscope according to claim 1, wherein the spectroscope light source (1, 50) comprises a
light source (1);
a first optical means (2) which parallelizes the output light of the light source;
an acousto-optical device (60), diffraction grating, or optical filter on which the output light from the first optical means (2) is incident; and
a second optical means (13) which focuses the output light from the acousto-optical device (60), diffraction grating, or optical filter;
and wherein said first optical fiber (19) has an input end located in the vicinity of the focal plane of the second optical means (13) within the range of the image of the said light source (1) made on this focal plane.

9. A spectroscope in accordance with claim 1, claim 7 or claim 8, wherein said optical coupler (20) uses a beam splitter for the branching part of the light; the transmitted light and reflected light from the beam splitter is incident on the said measurement and reference optical fibers (7, 9, 11), respectively; and the light quantity into the measurement optical fiber (7, 9) is configured to be greater than the light quality into the reference optical fiber (11).

10. A spectroscope in accordance with claim 1, claim 7 or claim 8, wherein the signal integration times in said two photo-detectors (10, 12) which detect the output light beams from said measurement and reference optical fibers (7, 9, 11), respectively, are different from each other.

## Patentansprüche

1. Spektroskop mit mindestens zwei optischen Fasern (7, 9, 11), eine zum Messen, die auf einem Lichtweg durch eine Probenkammer (8) verwendet wird, und eine als Referenz;
einer Spektroskop-Lichtquelle (1, 50);
einer ersten optischen Faser (19), deren Eingangsende auf einem ausgehenden Lichtweg von der Lichtquelle an die Probenkammer (8) angeordnet ist;
einem Optokoppler (20), der das Ausgangslicht der ersten optischen Faser (19) in zwei Lichtstrahlen trennt, die auf die optischen Fasern zum Messen bzw. für die Referenz (7, 9, 11) einfallen; und
ersten und zweiten Photodetektoren (10, 12), die Ausgangslichtstrahlen und von den optischen Fasern zum Messen bzw. für die Referenz (7, 9, 11) erfassen.

2. Spektroskop gemäß Anspruch 1, bei dem der Optokoppler (20) einen Halbspiegel (204) für den Verzweigungsteil des Lichts verwendet und konfiguriert ist, so daß das mit dem Halbspiegel (204) übertragene Licht und reflektierte Licht auf die optischen Fasern (7, 9, 11) zum Messen bzw. für die Referenz einfallen.

3. Spektroskop gemäß Anspruch 1, bei dem der Optokoppler (20) für den Verzweigungsteil des Lichts einen Spiegel mit zwei Oberflächen (208) verwendet, der an der Mitte des ausgehenden Lichtwegs von der ersten optischen Faser (19) angeordnet und konfiguriert ist, so daß von diesem Spiegel reflektierte Lichtstrahlen auf die optischen Fasern (7, 9, 11) zum Messen bzw. für die Referenz einfallen.

4. Spektroskop gemäß Anspruch 1, bei dem der Optokoppler (20) eine Sammellinse (302) oder -spiegel für den Verzweigungsteil des Lichts verwendet und konfiguriert ist, so daß das von der ersten optischen Faser (19) ausgehende Licht, das mit der obigen Sammellinse (203) oder -spiegel fokussiert wird, auf die optische Fasern (7, 9, 11) zum Messen bzw. für die Referenz einfällt.

5. Spektroskop gemäß Anspruch 1, bei dem der Verzweigungsteil des Optokopplers (20) mit einem optischen Wellenleiter gebildet ist.

6. Spektroskop gemäß Anspruch 1, bei dem der Verzweigungsteil des Optokopplers (20) durch paralleles Verschmelzen oder mechanisches Aneinanderhaften von zwei optischen Fasern gebildet wird.

7. Spektroskop gemäß Anspruch 1, bei dem die Spektroskop-Lichtquelle (1, 50) umfaßt:
eine Lichtquelle (1);
ein erstes optisches Mittel (2), das das Ausgangslicht der Lichtquelle parallel ausbildet;
ein Michelson-Interferometer (50), auf das das Ausgangslicht von dem ersten optischen Mittel einfällt; und
ein zweites optisches Mittel (6), das das Ausgangslicht von dem Michelson-Interferometer (50) fokussiert;
und wobei die erste optische Faser (19) ein Eingangsende aufweist, das in der Nähe der Brennebene des zweiten optischen Mittels (6) innerhalb des Bereichs des auf dieser Brennebene gemachten Bildes der Lichtquelle (1) angeordnet ist.

8. Spektroskop gemäß Anspruch 1, bei dem die Spektroskop-Lichtquelle (1, 50) umfaßt:
eine Lichtquelle (1);
ein erstes optisches Mittel (2), das das Ausgangslicht der Lichtquelle parallel ausbildet;
eine akusto-optische Vorrichtung (60), ein Beugungsgitter oder ein optisches Filter, auf die/das das Ausgangslicht von dem ersten optischen Mittel (2) einfällt;
und ein zweites optisches Mittel (13), das das Ausgangslicht von der akusto-optischen Vorrichtung (60), dem Beugungsgitter oder dem optischen Filter fokussiert; und
wobei die erste optische Faser (19) ein Eingangsende aufweist, das in der Nähe der Brennebene des zweiten optischen Mittels (13) innerhalb des Bereichs des auf dieser Brennebene gemachten Bildes der Lichtquelle angeordnet ist.

9. Spektroskop gemäß Anspruch 1, Anspruch 7 oder Anspruch 8, bei dem der Optokoppler (20) einen Strahlenteiler für das Verzweigungsteil des Lichts verwendet; wobei das übertragene Licht bzw. das reflektierte Licht von dem Strahlenteiler auf die optischen Fasern (7, 9, 11) zum Messen bzw. für die Referenz einfällt; und die Lichtmenge in die optische Faser zum Messen (7, 9) konfiguriert ist, um größer als die Lichtmenge in die optische Faser (11) für die Referenz zu sein.

10. Spektroskop gemäß Anspruch 1, Anspruch 7 oder Anspruch 8, bei dem die Signalintegrationszeiten in den beiden Photodetektoren (10, 12), die die Ausgangslichtstrahlen aus den optischen Fasern (7, 9, 11) zum Messen bzw. für die Referenz erfassen, unterschiedlich voneinander sind.

## Revendications

1. Spectroscope comprenant au moins deux fibres optiques (7, 9, 11), une destinée à mesurer, qui est utilisée sur une trajectoire lumineuse à travers une chambre d'échantillonnage (8), et une destinée à servir de référence ;
une source de lumière du spectroscope (1, 50) ;
une première fibre optique (19) dont l'extrémité d'entrée se situe sur une trajectoire lumineuse sortante provenant de ladite source de lumière vers ladite chambre d'échantillonnage (8) ;
un coupleur optique (20) qui sépare la lumière sortant de ladite première fibre optique (19) en deux faisceaux lumineux incidents sur lesdites fibres optiques de mesure et de référence (7, 9, 11), respectivement ; et
des premier et second photo-détecteurs (10, 12) qui détectent les faisceaux lumineux sortants provenant desdites fibres optiques de mesure et de référence (7, 9, 11), respectivement.

2. Spectroscope selon la revendication 1, dans lequel ledit coupleur optique (20) utilise un miroir semi-transparent (204) pour la partie de ramification de la lumière et est configuré de telle sorte que la lumière transmise et la lumière réfléchie à l'aide du miroir semi-transparent (204) soient incidentes sur lesdites fibres optiques de mesure et de référence (7, 9, 11), respectivement.

3. Spectroscope selon la revendication 1, dans lequel ledit coupleur optique (20) utilise un miroir à surface double (208) situé au centre de la trajectoire de la lumière sortante provenant de ladite première fibre optique (19) pour la partie de ramification de la lumière et est configuré de telle sorte que les faisceaux lumineux réfléchis à partir de ce miroir soient incidents sur lesdites fibres optiques de mesure et de référence (7, 9, 11), respectivement.

4. Spectroscope selon la revendication 1, dans lequel ledit coupleur optique (20) utilise une lentille de champ (203) ou un miroir pour la partie de ramification de la lumière et est configuré de telle sorte que la lumière sortante provenant de ladite première fibre optique (19) focalisée à l'aide de la lentille de champ susmentionnée (203) ou du miroir soit incidente sur lesdites fibres optiques de mesure et de référence (7, 9, 11).

5. Spectroscope selon la revendication 1, dans lequel la partie de ramification dudit coupleur optique (20) est formée avec un guide d'onde optique.

6. Spectroscope selon la revendication 1, dans lequel la partie de ramification dudit coupleur optique (20) est formée par fusion ou par adhésion mécanique de deux fibres optiques en parallèle.

7. Spectroscope selon la revendication 1, dans lequel la source de lumière du spectroscope (1, 50) comprend :
une source de lumière (1) ;
des premiers moyens optiques (2) qui mettent en parallèle la lumière sortante de la source de lumière ;
un interféromètre de Michelson (50) sur lequel la lumière sortante provenant des premiers moyens optiques est incidente ; et
des seconds moyens optiques (6) qui focalisent la lumière sortante provenant de l'interféromètre de Michelson (50) ;
et dans lequel ladite première fibre optique (19) présente une extrémité d'entrée située à proximité du plan focal des seconds moyens optiques (6) à l'intérieur de l'étendue de l'image de ladite source de lumière (1) produite sur ce plan focal.

8. Spectroscope selon la revendication 1, dans lequel la source de lumière du spectroscope (1, 50) comprend :
une source de lumière (1) ;
des premiers moyens optiques (2) qui mettent en parallèle la lumière sortante de la source de lumière ;
un dispositif acousto-optique (60), un réseau de diffraction, ou un filtre optique sur lequel la lumière sortante provenant des premiers moyens optiques (2) est incidente ; et
des seconds moyens optiques (13) qui focalisent la lumière sortante provenant du dispositif acousto-optique (60), du réseau de diffraction, ou du filtre optique ;
et dans lequel ladite première fibre optique (19) présente une extrémité d'entrée située à proximité du plan focal des seconds moyens optiques (13) à l'intérieur de l'étendue de l'image de ladite source de lumière (1) produite sur ce plan focal.

9. Spectroscope selon la revendication 1, la revendication 7, ou la revendication 8, dans lequel ledit coupleur optique (20) utilise un diviseur du faisceau pour la partie de ramification de la lumière ; la lumière transmise et la lumière réfléchie à partir du diviseur de faisceau est incidente sur lesdites fibres optiques de mesure et de référence (7, 9, 11), respectivement ; et la quantité de lumière dans la fibre optique de mesure (7, 9) est configurée de manière à être plus grande que la quantité de lumière dans la fibre optique de référence (11).

10. Spectroscope selon la revendication 1, la revendication 7, ou la revendication 8, dans lequel les temps d'intégration de signal dans lesdits deux photo-détecteurs (10, 12) qui détectent les faisceaux lumineux sortants provenant desdites fibres optiques de mesure et de référence (7, 9, 11), respectivement, sont différents l'un de l'autre.
